Europäisches Patentamt

European Patent Office

Office européen des brevets

(11) Publication number: **0 157 887**
A1

# EUROPEAN PATENT APPLICATION

(21) Application number: 84103199.0

(22) Date of filing: 22.03.84

(51) Int. Cl.⁴: **C 01 B 6/24**

(43) Date of publication of application:
16.10.85 Bulletin 85/42

(84) Designated Contracting States:
DE FR GB IT NL

(71) Applicant: **ETHYL CORPORATION**
**Ethyl Tower 451 Florida Boulevard**
**Baton Rouge Louisiana 70801(US)**

(72) Inventor: **Nelson, Gunner Elwood**
**12646 Lockhaven Avenue**
**Baton Rouge, Louisiana 70815(US)**

(74) Representative: **Sandmair, Kurt, Dr. Dr. et al,**
**Patentanwälte Dr. Berg Dipl.-Ing. Stapf Dipl.-Ing.**
**Schwabe Dr. Dr. Sandmair Postfach 86 02 45**
**Stuntzstrasse 16**
**D-8000 München 86(DE)**

(54) Synthesis of sodium aluminum hydride.

(57) In the direct synthesis process for producing NaAlH₄ (pressure hydrogenation of Na and Al in a liquid phase reaction medium at an elevated temperature) advantages are realized by insuring that the initial reaction mixture contains a small amount of water and/or an alcohol. In particular, the induction period is shortened. And, the time, trouble and expense of purifying and pre-drying the reaction medium are avoided.

EP 0 157 887 A1

- 1 -

Case 5064

## SYNTHESIS OF SODIUM ALUMINUM HYDRIDE

Of the known methods for synthesis of sodium aluminum hydride ($NaAlH_4$), the so-called "direct synthesis" process appears to offer the most promise. It involves reacting Na (or NaH), Al and $H_2$ under suitably elevated temperatures and pressures in an appropriate liquid reaction medium, such as an ether, amine or hydrocarbon. See in this connection:

E. C. Ashby, Chem. Ind. (London), 208 (1962);

E. C. Ashby et al., Inorg. Chem. 2, 499 (1963);

E. C. Ashby, French Patent 1,235,680 (May, 1960), and U. S. Patents 4,045,545 and 4,081,524;

J. Murib, U. S. Patent 3,556,740;

H. Clasen, Angew. Chem. 73, 322 (1961).

Among the drawbacks of the direct synthesis process are the relatively long induction periods that are usually encountered even when using activated aluminum. And, because of the sensitivity of Na (and NaH) to water and alcohols, it has been standard practice to carefully pre-dry or otherwise purify the liquid reaction medium before use. For example, it has been customary to dry the hydrocarbon media (e.g., toluene, hexane, trimethylhexane) over Na and to distill the ether media (e.g., diglyme, tetrahydrofuran, diethyl ether) over $NaAlH_4$ just prior to use.

- 2 -

This invention provides distinct improvements in the direct synthesis process for producing $NaAlH_4$. For one thing, it has been discovered that it is not necessary to carefully pre-dry or otherwise remove moisture and/or alcohol impurities from the reaction diluent prior to use in the process. In fact, it has been discovered that the presence in the diluent of small amounts of water and/or alcohols is actually beneficial in that it promotes the initiation of the reaction and thereby can significantly shorten the induction period that would otherwise be experienced under the same conditions when using the diluent in pre-dried, alcohol-free form. Without desiring to be bound or limited by theoretical considerations, it is believed that the alcohol and/or water initially present in the diluent forms in situ an active catalyst which tends to promote reaction start-up.

While any of the conventional liquid reaction media (e.g., hydrocarbons, ethers, amines) may be employed, a preferred embodiment of this invention involves use of an ether, most preferably a glycol dialkyl ether, notable the dimethyl ether of diethylene glycol (diglyme) or the dimethyl ether of ethylene glycol (monoglyme).

Alcohols that may be present in the initial reaction mixture (they will of course be consumed and converted into other forms in situ upon interaction with the active ingredient(s) or component(s) of the reaction system such as Na or NaH or NaAlH$_4$) include the alkanols and the glycol monoalkyl ethers, notably the monomethyl ether of diethylene glycol and the monomethyl ether of ethylene glycol. Such monohydric alcohol(s) may be present as naturally occurring impurities in the diluent introduced into the reaction system or may be deliberately added to the reaction mixture as a separate ingredient. Ordinary commercial grades of diglyme tend to contain small amounts (typically about 500 ppm) of the corresponding ether-alcohol, $CH_3OC_2H_4OC_2H_4OH$, and this ether-alcohol in such quantities contributes to the shortening of the induction period.

A small amount of water may be used in lieu of or in addition to the alcohol. Preferably the system will initially contain small amounts of both water and one or more alcohols. Small amounts of glycols may also be present or used, with or without water and/or monohydric alcohol.

In another embodiment there is provided an improved semi-continuous process for producing NaAlH$_4$. More particularly in a process for the preparation of sodium aluminum tetrahydride wherein reaction is effected among sodium, aluminum and hydrogen at an elevated temperature and pressure in a liquid ether reaction medium in which the sodium aluminum tetrahydride is soluble and wherein the reaction is performed in a semi-continuous manner whereby in successive runs the reaction is initiated by use of an aluminum-containing heel from the prior run, there is provided the improvement wherein the ether reaction medium employed in at least the initial run (and preferably in at least some of the ensuing runs) initially contains a small amount of water or an alcohol or both.

The aluminum used in the various embodiments of this invention can be of various grades and purities and is preferably finely divided. Pursuant to a preferred embodiment, I employ aluminum which contains a reaction promoting quantity of at least one of the metals: titanium, zirconium, hafnium, vanadium, niobium, uranium. The presence in the aluminum of at least a reaction-promoting quantity of titanium is especially preferred.

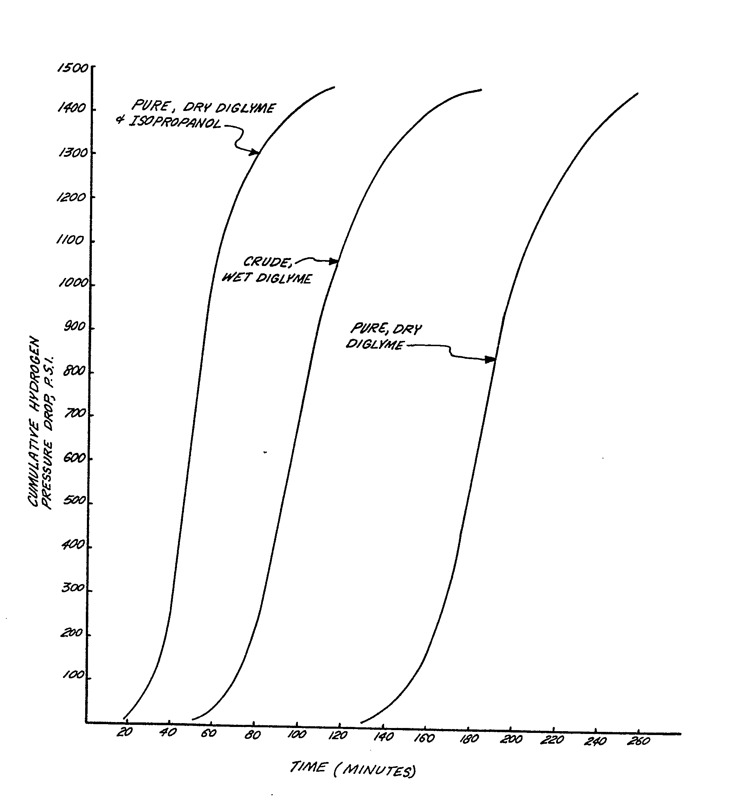

The Figure of the Drawing represents in visual form the results of several experiments and illustrates the reaction-promoting effects observed when the reaction mixture initially contained in one case an alcohol and in another case both water and an alcohol.

The aluminum for the process may be in any of several forms, preferably some comminuted form such as shavings, turnings, flakes, filings, etc. Most preferably, it is in the form of a fine powder. Although not essential, it is preferred that the aluminum contain a reaction-promoting amount of Ti, Zr, Hf, V, Nb, or U. Most preferably one or more of such metals is present in the aluminum as an alloy, although other ways of introducing such metal(s) into the reaction system to enhance reaction rate may prove successful.

A suitable range for the reaction-promoting quantity of metal is 300-2500 parts by weight per million parts aluminum. A preferred range is 450-2000 ppm. A more preferred range is 1000-2000 ppm. The reaction of the invention generally proceeds at a faster rate with increased amounts of metal. The upper point of diminishing returns has not been determined. A particularly desirable and useful aluminum powder is sold under the trade designation I-783 by Reynolds Metals.

Of the reaction promoting metals, titanium and zirconium are preferred because of their widespread availability although in some instances uranium may be preferred where available as a waste source or the like. Other similar metals may prove to be equivalent for this purpose. Titanium is deemed the most preferred reaction promoter for the aluminum.

The aluminum is preferably present in a stoichiometric excess of the amount of sodium being used. This excess is preferably such that the Al:Na gram-atom ratio is at least about 2:1, more preferably 3:1 or more. Use of such excesses of Al enhances the rate of the reaction once it has been initiated. Naturally one should take into consideration the amount of Na that will be consumed in reaction with the water and/or alcohol being charged into the initial reaction mixture.

As indicated above, the reaction is best carried out in an innocuous liquid reaction medium, i.e., a liquid medium that does not interfere with the inventive process. Any of a broad range of materials may be used for this purpose, including hydrocarbons (preferably paraffinic, cycloparaffinic or aromatic), ethers, amines, and the like. Exemplary hydrocarbons include n-hexane, n-heptane, 2,2,3-trimethylbutane, n-octane, 2-methylheptane, 3-methylheptane, 4-methylheptane, 2,2,4-trimethylpentane, n-decane, cyclohexane, 1,4-dimethylcyclohexane, decahydronaphthalene, toluene, ethylbenzene, and the like. Typical ethers include diethyl ether, ethyl- isopropyl ether, ethylisobutyl ether, dipropyl ether, ethylisoamyl ether, tetrahydrofuran, 1,4-dioxane, and the like. Amines, such as triethylamine, tributylamine, triamylamine, cyclohexyldimethylamine, N,N-dimethylaniline, etc., are also suitable. Mixtures of different materials of the same general class (e.g., two or more different ethers) or of different classes (e.g., an ether and a hydrocarbon) may be employed as the reaction medium.

Preferably the reaction medium is a glycol ether, especially a dilower alkyl ether of an alkylene glycol such as the dimethyl ether of ethylene glycol (monoglyme), the dimethyl ether of propylene glycol, the dimethyl ether of diethylene glycol (diglyme), the dimethyl ether of triethylene glycol (triglyme), the diethyl ether of ethylene glycol, and the like. Most preferred are diglyme and monoglyme.

The reaction is a pressure hydrogenation conducted at pressures of at least 100 psig up to 5000 psig. A preferred range is 750-2000 psig. More preferred is 1000-2000 psig.

While the reaction will proceed at relatively low temperature, use of an elevated temperature is preferred. A suitable range is 65-300°C depending upon the pressure and reaction medium employed. A preferred range is 100-200°C and a more preferred range is 120-170°C. As indicated by E. C. Ashby et al. (loc. cit.) the most desirable temperature for use in any given situation will be influenced by such factors as the pressure, reaction medium and reaction time being used. In general, however, temperatures of 140 to 160°C are usually most preferred.

The reaction should be carried out so that product sodium aluminum tetrahydride is readily recovered. A suitable range of weight percent product tetrahydride in the reaction medium is 5-20 percent. A preferred range is 10-15 weight percent.

The reaction is preferably run with sodium as the limiting reactant.

Pursuant to one embodiment of this invention a suitable monohydric alcohol is introduced into the initial reaction mixture in an amount sufficient to enhance reaction startup (i.e., to shorten the induction period that would otherwise be experienced absent the alcohol). Usually amounts of alcohols ranging up to about 10 mole percent based on the amount of sodium charged will be sufficient, although somewhat higher amounts are feasible, though less preferred. Preferably the initial reaction mixture will contain up to about 5 mole percent of the alcohol(s) based on the amount of sodium charged. Suitable alcohols include the alkanols and cycloalkanols such as methanol, ethanol, propanol, isopropanol, butanol, isobutanol, sec-butanol, the pentanols, the hexanols and like longer chain liquid alkanols, cyclohexanol, the methylcyclohexanols, and the like. Ether-alcohols such as 2-ethoxyethanol, 2-propoxy-ethanol, 4-methoxybutanol, etc., as well as the monolower alkyl ethers of polyalkylene glycols such as the monomethyl-, monoethyl-, monopropyl-, and monobutyl ethers of diethylene glycol and of triethylene glycol are also highly suitable. Mixtures of different alcohols can be used.

As noted above, the alcohol(s) may also be introduced into the initial reaction mixture as an impurity in the liquid being employed as the reaction medium, such as a glycol dialkyl ether. For example, unless highly purified, diglyme will usually contain small amounts of $CH_3OC_2H_4OC_2H_4OH$ and monoglyme will usually contain small amounts of $CH_3OC_2H_4OH$, the amounts being in the range of, say, 100 to 1000 ppm. Such alcohol impurities are suitable in the practice of this invention.

Preferably the initial reaction mixture will contain, in addition to or in lieu of the alcohol(s) a small amount of water so that reaction initiation is promoted. While the amounts of water may be varied within reason, amounts of up to 2 to 3 mole percent based on the sodium charged will usually suffice. Here again the water may be separately charged to the initial reaction mixtures or introduced thereto as a component of or impurity in the reaction medium being charged. For example, good results have been obtained using diglyme typically having about 150 ppm of water and about 500 ppm $CH_3OC_2H_4OC_2H_4OH$ available as an article of commerce from Grant Chemical Company.

It will of course be self-evident that the amount of alcohol and/or water introduced into the initial reaction system will be limited so as not to consume an inordinate amount of the sodium charged nor to create a hazardous condition. Until considerable familiarity with the inventive process has been achieved, it is recommended that one start in any given system with an essentially anhydrous reaction mixture and carefully meter therein a small measured amount of the alcohol(s) and/or water and in this way determine the smallest amount required to give the desired reaction promotion effect under the particular reaction conditions selected for use.

A particularly desirable way in which to conduct the process is on a semi-continuous or cyclic basis with a reactive aluminum-containing heel or solid residue being carried through for successive cycles. All indications are that the cycles may be continued indefinitely without depletion of activating aluminum-containing material in the heel. This mode of operation offers the advantages of enhanced reactor utilization (increased throughput) and makes it possible to recover the $NaAlH_4$ in the form of a very useful product solution, especially when an ether such as diglyme or monoglyme is employed as the reaction medium. And in this embodiment, the use of a glycol dialkyl ether especially diglyme or monoglyme (or both) is in fact preferred.

- 11 -

In the semi-continuous mode of operation, upon completion of the first pressure hydrogenation reaction (or when the reaction has proceeded to the desired extent) the reaction mixture is allowed to settle and the supernatent solution of $NaAlH_4$ in the liquid reaction medium (e.g., diglyme, monoglyme, etc.) is decanted off leaving an active aluminum-containing heel in the reactor. A fresh charge of Na, Al and the liquid reaction medium is then introduced and the next pressure hydrogenation reaction is conducted under the appropriate reaction conditions selected, and thereafter the settling, decantation and recharging procedures are again repeated. In each case, the active aluminum-containing heel will cause the ensuing reaction to initiate very rapidly. Thus it is not necessary in the practice of this invention to introduce water and/or alcohol(s) into the ensuing reaction mixtures. However, a feature of this invention is that the liquid reaction medium being charged into these ensuing reactions need not be pre-dried and pre-purified to remove the small amounts of water and/or alcohol normally present therein. Thus the trouble, time and expense of such pre-purification operations are avoided pursuant to this invention -- reaction initiates and proceeds very well in the ensuing reactions notwithstanding the initial presence in the liquid medium of the small amounts of water and/or alcohol.

In the semi-continuous mode of operation, as in other modes such as batch operations, use of aluminum containing one or more of the above mentioned metals, especially Ti, for promoting the reaction is preferred, though not essential.

The following examples are presented for the purpose of further illustrating the practice and advantages of this invention.  In these examples a series of pressure hydrogenation reactions were carried out under the same conditions with the exception that in one case (Example I) the initial reaction mixture contained no water or alcohol reaction initiator, in another case (Example II) the initial reaction mixture contained an alcohol reaction initiator, and in the third case (Example III) the initial reaction mixture contained both water and an alcohol as reaction initiators.  In each of the experiments, use was made of a 300 mL autoclave equipped with a turbine stirrer, a cooling coil, an internal thermocouple for measuring reaction temperature, and appropriate hydrogen pressurization and vent lines.  In all three experiments the diglyme used came from the same batch of product.  In Examples I and II, a portion of the diglyme as received was pre-dried and pre-purified by distillation over NaAlH$_4$ whereas in Example III the diglyme was used as received.

## Example I - Water and Alcohol-Free System

Into the autoclave were charged 110 mL diglyme (pre-purified by distillation from $NaAlH_4$ to remove all alcohol and water therefrom), 8.8 grams (0.382 mole) of sodium and 35 grams (1.296 moles) of aluminum containing 1900 ppm of titanium (Reynolds I-783 aluminum). With the turbine stirrer operated at 600 rpm, the system was sealed, pressurized with hydrogen to 1000 psig, and held at 140°C until the pressure dropped to 800 psig. At this point, the system was repressurized to 1000 psig and the procedure repeated until reaction was completed. The times required to reach the repressurization stages were recorded and thus served as a means of indicating the extent of the induction period and the rapidity with which the reaction proceeded once the reaction was initiated. It was found that under these conditions reaction did not initiate until about 120 minutes after application of the pressure hydrogenation conditions (140°C/1000 psig hydrogen). Reaction was completed after a total time of about 210 minutes. The results of this experiment are plotted in the accompanying figure -- see the right-hand curve bearing the legend "pure, dry diglyme".

## Example II - Use of Alcohol Reaction Promoter

The procedure of Example I was repeated with the exception that to the initial anhydrous alcohol-free

- 14 -

mixture there was added 2 grams (0.033 mole) of reagent grade isopropanol.  This pressure hydrogenation reaction initiated after only about 20 minutes after the application of the above pressure hydrogenation conditions.

The curve in the figure bearing the legend "pure, dry diglyme & isopropanol" depicts the experimental results of this example.

Example III - Use of Alcohol and Water Reaction Promoters

The procedure of Example I was again repeated except that in this instance the diglyme charged to the system was used as received from the manufacturer (Grant Chemical Company).  According to the manufacturer, such diglyme typically contains about 150 ppm of water and about 500 ppm of alcohol ($CH_3OC_2H_4OC_2H_4OH$).  It was found that the pressure hydrogenation reaction initiated about 40 minutes after the application of the pressure hydrogenation conditions.  The results of this experiment are graphically depicted in the figure as the curve bearing the legend "crude, wet diglyme".

While this invention has been discussed primarily with reference to use of sodium as one of the initial reactants (and use of Na is definitely preferred), it is contemplated that the improvements described herein may be achieved when using sodium hydride instead of sodium.

As is well known in the art and reported in the literature, sodium aluminum tetrahydride is useful as a chemical reducing agent in a variety of applications.

- 15 -

CLAIMS

1. In a process for the preparation of sodium aluminum tetrahydride by reaction among sodium, aluminum and hydrogen at an elevated temperature and pressure in a liquid reaction medium, the improvement characterized in that the liquid reaction medium initially contains a small amount of water or an alcohol or both sufficient to promote initiation of the reaction.

2. The process as claimed in Claim 1 in which the liquid reaction medium contains an alcohol.

3. The process as claimed in Claim 2 in which the reaction medium is a glycol dialkyl ether and the alcohol is isopropanol.

4. The process as claimed in Claim 3 in which said isopropanol is present in an amount of up to 5 mole percent based on the amount of sodium.

5. The process as claimed in Claim 1 in which said liquid reaction medium contains water.

6. The process as claimed in Claim 1 further characterized in that the reaction medium is a glycol dialkyl ether and in that said glycol dialkyl ether initially contains a small amount of water and glycol monoalkyl ether sufficient to initiate the reaction.

7. The process as claimed in Claim 6 in which said ether is the dimethyl ether of diethylene glycol.

8. The process as claimed in Claim 6 in which said ether is the dimethyl ether of ethylene glycol.

9. The process as claimed in Claim 1 in which said aluminum contains a reaction-promoting quantity of at least least one of the metals: titanium, zirconium, hafnium, vanadium, niobium, uranium.

10. The process as claimed in Claim 1 in which said aluminum contains at least a reaction-promoting quantity of titanium.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | US-A-4 456 584 (M.F. GAUTREAUX) * Column 5, line 51 - column 6, line 10 * | 1-10 | C 01 B 6/24 |
| A | US-A-3 387 949 (SNYDER) | | |
| A | GB-A-1 105 167 (METALLGESELLSCHAFT) | | |
| A | US-A-3 505 036 (K. LINDSAY) | | |
| D,A | US-A-4 045 545 (ASHBY) | | |
| D,A | US-A-4 081 524 (ASHBY) | | **TECHNICAL FIELDS SEARCHED (Int. Cl.4)** |
| D,A | INORGANIC CHEMISTRY, vol. 2, no.3, June 1963; E.C. ASHBY et al. "Direct Synthesis of Complex Metal Hydrides", pages 499-504 * Page 499 * | | C 01 B 6/00 |

The present search report has been drawn up for all claims

| Place of search BERLIN | Date of completion of the search 12-11-1984 | Examiner ASSOGNA R. |
|---|---|---|